# EUROPEAN PATENT SPECIFICATION

(11) **EP 2 581 275 B1**
(45) Date of publication and mention of the grant of the patent: **17.09.2014**
(21) Application number: 11184924.6
(22) Date of filing: 12.10.2011
(51) Int. Cl.: B60R 21/217, B60R 21/36

(54) **Improvements in or relating to an airbag for a motor vehicle safety arrangement**
Verbesserungen bei oder im Zusammenhang mit einem Airbag für eine Sicherheitsanordung eines Kraftfahrzeugs
Améliorations de ou associées à un airbag pour un agencement de sécurité de véhicule à moteur

(43) Date of publication of application: 17.04.2013
(73) Proprietor: Autoliv Development AB, 447 83 Vårgårda (SE)
(72) Inventor: Lucic, Dobrila, 44236 Kungälv (SE); Nilsson, Bert, 46133 Trollhättan (SE)
(74) Representative: Parry, Simon James

(56) References cited:
- EP-A1- 1 514 742
- EP-A1- 1 908 646
- WO-A1-2011/068010
- DE-A1-102005 028 580
- DE-A1-102008 057 169
- DE-A1-102009 016 700
- DE-U1-202008 005 545
- JP-A- 9 175 302

## Description

The present invention relates to an airbag for a motor vehicle safety arrangement, and to a method of inserting an inflator inside an airbag for a motor vehicle safety arrangement. More particularly, it is envisaged that the invention will be particularly beneficial for use in the field of so-called pedestrian protection airbags.

When a motor vehicle is involved in a frontal impact with a pedestrian, it is common for the body of the pedestrian to strike the windscreen or A-pillars of the vehicle which can result in serious injury to the pedestrian, and significant damage to the vehicle. In an attempt to alleviate this, it has been proposed to provide a motor vehicle with a so-called pedestrian protection airbag (PPA) which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. The rear of the hood or bonnet may be lifted by a suitable air-bag, piston, or other arrangement to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Alternatively, it is also possible to configure the pedestrian airbag such that as it begins inflation it performs the hood-lifting function itself. Such an arrangement may incorporate a cell structure to the pedestrian airbag beneath the hood, or may comprise a structure adjacent the airbag to guide the airbag for inflation in a direction effective to lift the rear part of the hood or bonnet.

As will be appreciated, however, space beneath the rear part of a vehicle's hood or bonnet can be very limited which makes it difficult to conveniently package a sufficiently large airbag to ensure adequate protection for a pedestrian. Also, the larger the airbag which is successfully packaged in such an arrangement, then the larger the volume of gas required to inflate the airbag (which also necessitates a larger inflator). Relying on a large volume of gas to inflate a pedestrian airbag generally results in a slower deployment time which can adversely affect the effectiveness of the airbag in preventing or reducing injuries to a pedestrian.

Typical pedestrian airbags of the general type indicated above comprise a narrow throat or neck which projects outwardly from the main inflatable volume of the airbag and which is fluidly and fixedly connected to an inflator, for example a gas generator, located externally of the inflatable volume of the airbag. The throat or neck thus defines a fluid flow conduit interconnecting the inflatable volume of the airbag and the inflator. However, a problem with such an arrangement is that it is relatively bulky. Another problem is that by providing the inflator externally of the main inflatable part of the airbag, there can be a short delay an initial outflow of inflating gas from the inflator passing into the main chamber of the airbag, by virtue of the fact that it must first travel along the neck or throat. Whilst this delay may only be very short, (measured in milliseconds), swift inflation of the airbag is imperative, and so any possible reduction in inflation time which can be achieved can significantly improve the performance of the airbag in preventing injury.

It would therefore be advantageous to be able to locate the inflator inside the main inflatable chamber of the airbag, as opposed to locating it externally and connecting it to the main chamber via a neck or throat. Internally located inflators have been proposed previously for use with driver or passenger airbags located inside the cabin of a motor vehicle. Many such driver or passenger airbags are typically provided with vent apertures in order to permit venting of the airbag after inflation and impact by an occupant of the vehicle, in order to prevent unnecessary injury to the occupant from impacting a "hard" inflated airbag. These vent apertures provide convenient apertures for insertion of an internally located inflator.

However, pedestrian protection airbags generally do not have vent apertures. This is because it is important for external pedestrian protection airbags to remain fully inflated for a longer period of time than internal occupant protection airbags; in order to provide protection against possible multiple impacts between the vehicle and a pedestrian, because the pedestrian airbags must cope with a very much larger range of impact speeds between the pedestrian and the airbag, and also because such airbags are generally relatively thin for their total volume. Of course this means that pedestrian airbags do not have any convenient apertures for the insertion of an inflator.

Although it would be possible to insert an inflator inside the inflatable chamber of a pedestrian airbag during manufacture of the airbag, this is considered undesirable for a number of reasons. Firstly, different vehicle manufacturers typically specify different inflators, sometimes even specifying different inflators for different models in their own ranges. It is therefore usual practice to mate an airbag with a chosen inflator during assembly of an airbag unit, rather than during manufacture of the airbag itself. Also, of course, if an inflator is inserted inside an airbag during manufacture of the airbag, the airbag must be destroyed in order to subsequently remove the inflator for possible checking, servicing or replacement.

Documents EP1514742 and DE202008005545 disclose airbags that have inflators housed within them.

There is therefore a need for an airbag which is configured for the convenient insertion of an inflator through an opening which is then sealed, or at least substantially sealed, so as to prevent significant leakage of inflating gas from the airbag upon inflation.

It is therefore a first object of the present invention to provide an improved airbag for a motor vehicle safety arrangement.

It is another object of the present invention to provide an improved method of inserting an inflator inside an airbag for a motor vehicle safety arrangement.

According to a first aspect of the present invention, there is provided an airbag for a motor vehicle safety arrangement, the airbag defining an inflatable volume for the receipt of inflating gas from an inflator and being formed from a panel of flexible material, the panel having an aperture configured to receive an inflator for insertion into the inflatable volume, and a connection formation which is spaced from the aperture and configured for connection to an inflator provided inside the inflatable volume, the airbag has an internal patch of flexible material provided inside the inflatable volume and which is affixed to panel so as to cover the aperture, the patch and the panel cooperating to define a passageway extending generally from the aperture towards the connection formation and being configured for the passage therethrough of an inflator upon insertion of the inflator into the inflatable volume via the aperture, the airbag being characterised by further comprising inner and outer flaps of flexible material, the inner flap being arranged to extend through the aperture in the panel from a first end which is affixed to the patch, to a second end located outside the inflatable volume, and the outer flap is affixed to the outside of the panel adjacent the aperture in the panel.

Preferably, said aperture is spaced from a peripheral seam of the airbag.

Advantageously, said passageway has a first open end distal to said connection formation and defined by said aperture in the panel, and a second open end proximal to said connection formation.

Conveniently, said first and second open ends are spaced from one another by at least 3cm.

Preferably, said first and second open ends are spaced from one another by approximately 5 cm

It is proposed that the spacing between the first and second open ends, and hence the length of the passageway defined therebetween, should be less than the length of an inflator intended for insertion into the airbag.

Said second open end may be defined by an edge of the patch, said edge being unconnected to the panel.

Alternatively, the second open end may be defined by an aperture provided through said patch.

Preferably, the or at least one said aperture is provided in the form of a slit.

Advantageously, said first open end is defined by a first slit provided in the panel, and said second open end is defined by a second slit provided in the patch, said slits being substantially parallel.

Conveniently, said panel and said patch are both formed of fabric.

Conveniently, the flap is arranged to be folded in the region of the aperture formed in the panel so as to adopt a folded configuration in which the second end of the flap lies adjacent an outer surface of the panel in the region of the connection formation.

Advantageously, the outer flap is arranged to lie over and against the inner flap when the inner flap adopts said folded configuration.

Preferably, said flaps are formed of fabric.

Conveniently, said connection formation comprises at least one mounting aperture formed through the panel and configured to receive a mounting formation projecting from an inflator.

Preferably, the or each said flap comprises a respective additional mounting aperture configured to receive said mounting formation of said inflator for connection thereto.

Advantageously, the airbag is a pedestrian protection airbag configured for inflation on or against the exterior of a motor vehicle to provide protection to a pedestrian in the event of an impact with the motor vehicle.

Conveniently, the airbag is provided in combination with said inflator.

According to another aspect of the present invention, there is provided a method of inserting an inflator inside an airbag for a motor vehicle safety arrangement, the method comprising the steps of: providing an inflator; providing an airbag defining an inflatable volume for the receipt of inflating gas from the inflator and which is formed from a panel of flexible material; providing an aperture in the panel, the aperture being configured to receive said inflator; providing the panel with a connection formation in spaced relation to the aperture and which is configured for connection to said inflator; providing an internal patch of flexible material inside the inflatable volume; affixing the patch to the inside surface of the panel so as to cover the aperture and in a manner effective to define a passageway between the patch and the panel, the passageway extending generally from the aperture towards the connection formation; inserting the inflator into the internal volume via the aperture and passing the inflator through the passageway towards the connection formation; and connecting the inflator to the panel via the connection formation, the method being characterised in that it further comprises providing said airbag with inner and outer flaps of flexible material, the inner flap being arranged to extend through the aperture in the panel from a first end which is affixed to the patch, to a second end located outside the inflatable volume, and the outer flap being affixed to the outside of the panel adjacent the aperture in the panel, the method further comprising the steps of folding the inner flap after the inflator has been passed through the passageway to thereby bring the free end of the inner flap into a position in which it lies adjacent the outer surface of the panel in the region of the connection formation, and folding the second flap such that it lies against the first flap.

So that the invention may be more readily understood, and so that further features thereof may be appreciated, embodiments of the invention will now be described by way of example with reference to the accompanying drawings in which:
Figure 1 is a schematic illustration of a basic pedestrian protection airbag suitable for the present invention;
Figure 2 is an enlarged view of the region of the airbag highlighted by area A in Figure 1;
Figure 3 shows a patch forming part of the present invention;
Figure 4 shows the patch of figure 3 with a flap attached;
Figure 5 is a view corresponding generally to that of figure 2, but which shows the patch and flap of figure 4 attached to a panel of the airbag;
Figure 6 is a view corresponding generally to that of figure 5, showing the insertion of an inflator inside the airbag;
Figure 7 shows the inflator inserted and appropriately positioned inside the airbag, and the flap in a subsequent folded configuration;
Figure 8 is a view corresponding generally to that of figure 5, but shows that an additional flap is provided;
Figure 9 is a view corresponding generally to that of figure 7, but shows the alternative arrangement of figure 8, with the additional flap in a folded configuration;
Figure 10 is a view, generally similar to that of figure 8, but which shows another alternative embodiment.

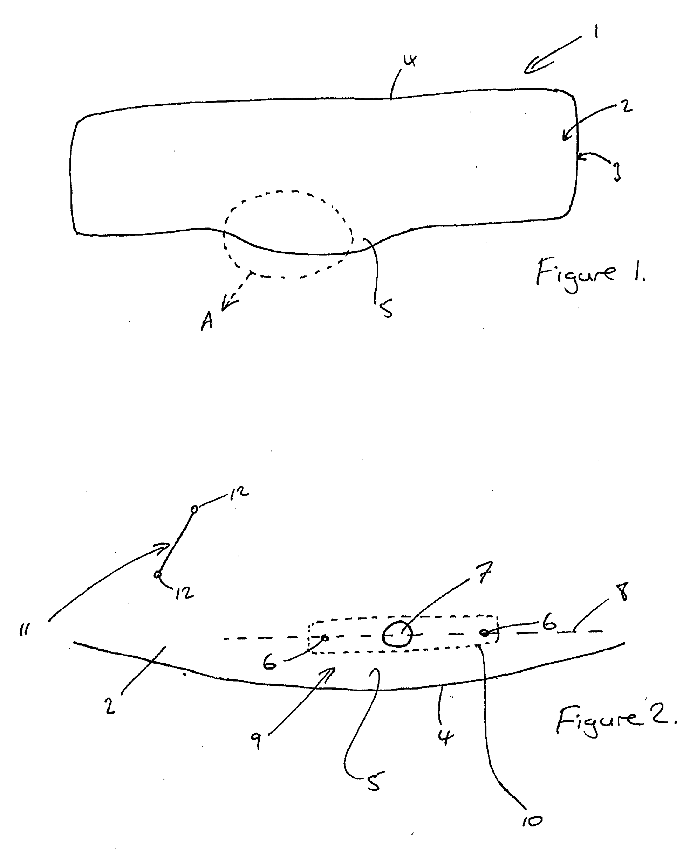

Referring initially to figure 1, there is shown a pedestrian protection airbag 1 suitable for inflation over and across the windscreen and A-pillars of a motor vehicle (not shown), in a manner known *per se*. The airbag illustrated is shown in a basic form to clearly illustrate the general concept of the invention. However, as will be appreciated by those of skill in the art, other more complex airbag configurations may be used instead. Also, it should be appreciated that in its broadest sense, the invention is not limited specifically to airbags of the pedestrian protection type, and could conceivably find application in other types of airbag.

The basic form of airbag 1 illustrated may be formed from two substantially identical and generally rectangular panels of 2, 3 of flexible material such as woven fabric, which are superimposed on one another and interconnected around their aligned edges by a peripheral seam 4 to define therebetween a large internal inflatable volume for the receipt of inflating gas from an inflator such as a gas generator. The airbag 1 is formed so as to have a region 5, which projects slightly from the lower longitudinal edge of the airbag and which is configured to receive and be connected to an internal inflator provided inside the inflatable volume of the airbag, as will be described in more detail below.

As will be appreciated by those of skill in the art of airbag manufacture, although the airbag 1 has been described above as being formed from two separate panels 2, 3 of flexible material, it is envisaged that in variants of the invention the airbag could be formed from a single panel of flexible material, the panel being folded in half to create two superimposed layers which can then be interconnected by a peripheral seam in an otherwise similar manner to that described above with reference to figure 1. It is also envisaged that in some embodiments the two panels 2, 3 could be woven simultaneously via a so-called "one-piece weaving" technique known *per se* in which the warp and weft yarns forming the two panels are interwoven in selected areas to form an interconnecting peripheral seam which is integral to the woven structure of the two panels.

Turning now to consider figure 2, the region of the airbag depicted by circle A in figure 1 is shown in enlarged view. As will be noted, a transversely central part of the downwardly projecting region 5 is provided with a linear array of three apertures formed through the fabric of one of the panels 2. The array of apertures comprises a pair of relatively small and spaced apart mounting apertures 6, between which is provided a relatively large connection aperture 7. The apertures are all centred on a common axis 8 and cooperate to define a connection formation indicated generally at 9 in figure 2 for the receipt of, and connection to, an internal inflator 10 (illustrated in phantom in its installed position) which preferably takes the form of a generally elongate cylindrical gas generator. The inflator 10 preferably comprises a pair of spaced apart mounting formations in the form of radially projecting spigots or studs, each of which will be received through a respective mounting aperture 6 and adapted for connection to the structure of the motor vehicle in a known manner. The connection aperture 7 is provided to accommodate an electrical plug and lead for electrical connection to the inflator 10. Insertion of the inflator 10 into the inflatable volume of the airbag 1 will be described in detail below.

In addition to the apertures 6, 7 of the connection formation 9, the panel 2 comprises an insertion aperture 11 formed through the fabric of the panel and which is spaced inwardly from both the peripheral seam 4 of the airbag and the connection formation 9. In the particular embodiment illustrated in figure 2, the insertion aperture 11 takes the form of an elongate straight slit which is oriented so as to make an acute angle (preferably of approximately 45°) to the axis 8. In order to prevent propagation of the slit 11 through the woven fabric of the panel 2, a small circular hole 12 may be formed at each end of the slit 11 as shown. The slit 11 has a length sufficient to permit the insertion and substantially unrestricted passage of the inflator 10 through the aperture.

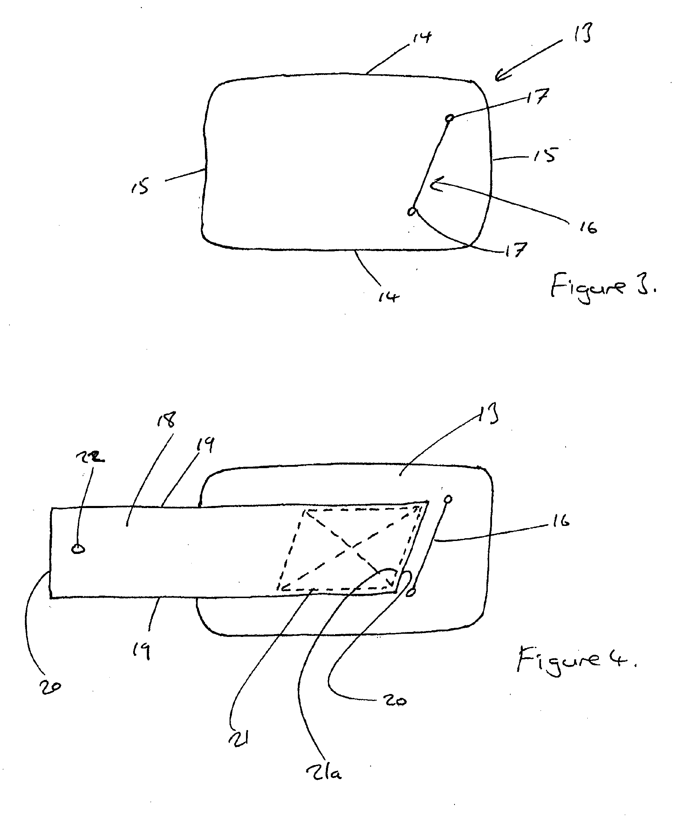

Turning now to consider figure 3, there is shown a generally rectangular patch 13 of flexible material. The patch 13 is preferably formed of the same fabric as the panels 2, 3. The patch 13 has a pair of substantially parallel longitudinal side edges 14 and a pair of substantially parallel end edges 15. Spaced inwardly a small distance from one of the end edges 15, there is provided an aperture 16 through the fabric of the patch. The aperture 16 is of substantially identical form to the insertion aperture formed through the panel 2, and so in the embodiment illustrated takes the form of an elongate slit having a pair of small circular holes 17 at its ends to prevent propagation of the slit through the fabric of the patch. The slit 16 is of similar size to the slit 11 formed through the panel 2, and is thus sized to permit the insertion and substantially unrestricted passage of the inflator 10 through the aperture. The slit 16 is oriented so as to make an acute angle (preferably 45°) to the longitudinal side edges 14 of the patch.

As shown in figure 4, an elongate flap 18 is shown affixed to the patch 13. The flap is formed of flexible material, and is preferably formed of fabric. The flap preferably takes the shape of an elongate trapezium having a pair of parallel longitudinal side edges 19 and a pair of non-parallel transverse end edges 20. More particularly, it will be noted that in the orientation illustrated in figure 4, the left-hand end edge 20 is substantially orthogonal to the two side edges 19, whilst the right-hand end edge 20 is angled relative to the side edges 19. The flap 18 is shown affixed to the patch 13 via a series of lines of stitching 21 in the region of its right-hand end such that its angled right-hand end edge is adjacent, and generally parallel to the slit 16. Whilst the lines of stitching 21 are illustrated extending across a significant area of the right hand end of the flap 18, it should be appreciated that the flap could be affixed to the patch 13 via only a single line (21 a) of stitching running adjacent and parallel to the right-hand end edge 20.

The left-hand end of the flap 18, remote from the slit 16 formed through the patch, extends beyond the peripheral edge of the patch 13, and has a small mounting aperture 22 formed through the fabric of the flap, the mounting aperture 22 having a similar size and configuration to the mounting apertures 6 formed through the fabric of the panel 2.

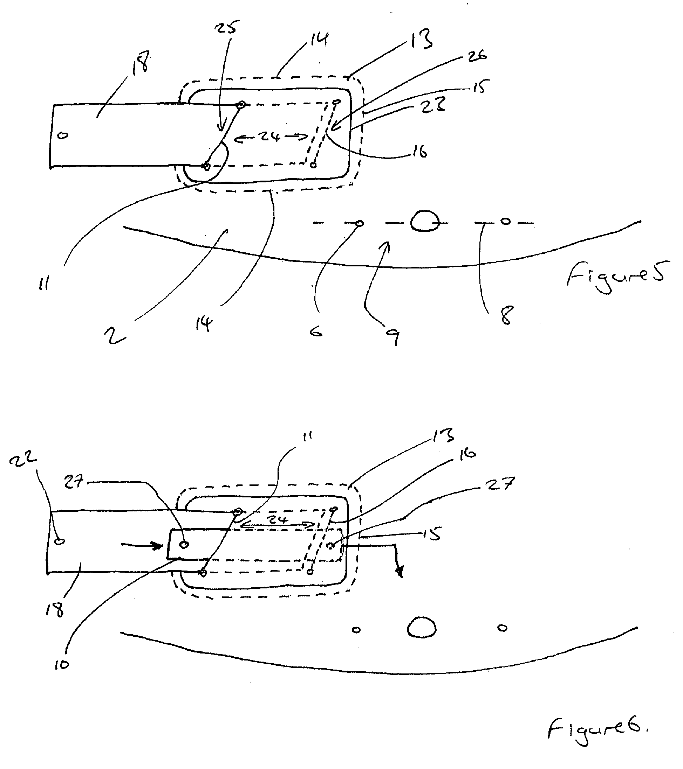

Turning now to consider figure 5, the patch 13 and flap 18 illustrated in figure 4 are shown in combination with the panel 2 of the airbag 1. More particularly, the patch 13 is shown affixed to the inside surface of the panel 2, via a peripheral line of stitching 23 running around the periphery of the patch 13. As will be appreciated, the patch 13 is thus affixed to the panel 2 inside the inflatable volume defined between the two panels 2, 3 of the airbag 1. Of course, it is envisaged that the patch 13 will be affixed to the panel 2 before the two panels are superimposed and interconnected to define the inflatable volume of the airbag 1.

In more detail, it will be noted from figure 5 that the patch 13 is affixed to the panel 2 so as to cover the slit 11 formed through the panel. Also, it will be noted that the patch is oriented such that its longitudinal side edges 14 are substantially parallel to the axis 8 of the connection formation 9, and such that its slit 16 is spaced from and substantially parallel to the slit 11 formed through the panel 2. The two slits 11, 16 are preferably spaced from one another by at least 3cm, and most preferably by approximately 5 cm. By virtue of the peripheral stitching 23 affixing the patch 13 to the panel 2, the patch and the panel thus cooperate to define a passageway 24 between the patch the panel, with each slit 11, 16 defining a respective open end to the passageway. As will thus be appreciated, the slit 11 formed through the panel 2 defines a first open end 25 of the passageway distal to the connection formation 9 defined by the apertures 6, 7, and the slit 16 formed through the patch 13 defines a second open end 26 of the passageway proximal to the connection formation 9.

As also illustrated in figure 5, as the patch 13 is offered up to the inside of the fabric panel 2 for attachment to the panel, the free end of the flap 18 is inserted through the slit 11 formed in the panel so as to extend outwardly of the inflatable volume of the airbag.

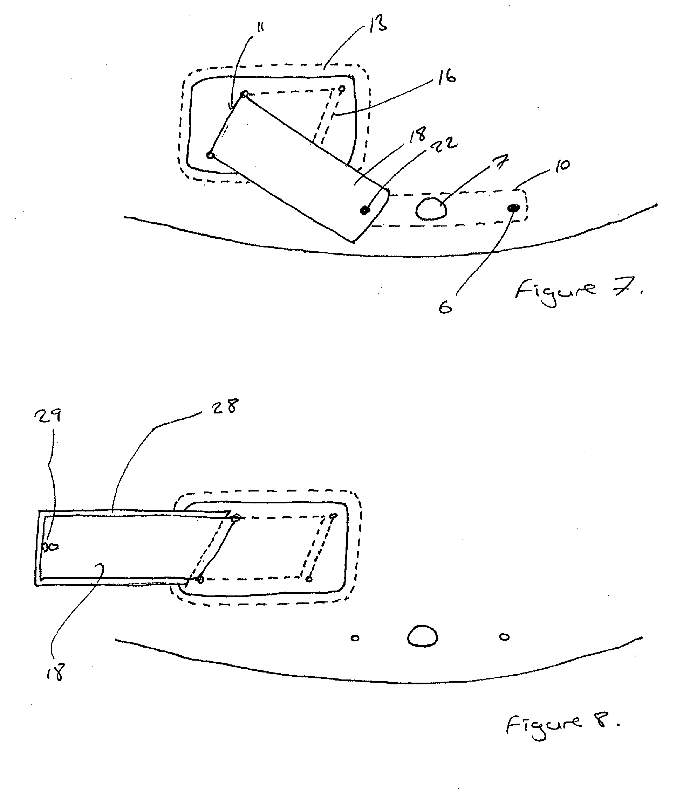

Figure 6 illustrates the arrangement of figure 5, and shows an inflator 10 of the type mentioned above having a pair of spaced apart mounting spigots 27 being inserted into the inflatable volume of the airbag as denoted by the arrows. More particularly, the inflator 10 is initially inserted through the first open end 25 of the passageway 24 as defined by the slit 11 formed through the panel 2. The inflator 10 is then passed along the passageway 24, and through the second end 26 of the passageway as defined by the slit 16 formed through the patch 13. The inflator 10 thus exits the passageway 24 inside the inflatable volume of the airbag, whereupon it can be manipulated so as to be moved downwardly into the position illustrated in phantom in figure 7 in which its mounting spigots 27 are aligned with and inserted through respective mounting apertures 6 formed in the panel 2.

Once the inflator 10 has been properly positioned relative to the connection formation 9 as depicted in figure 7, and its mounting spigots 27 inserted through the mounting apertures 6, the flap 18 is then manipulated so as to become folded around the slit 11 in the panel 2, thereby bringing its free end into a position in which it lies adjacent the outer surface of the panel 2 in the region of the connection formation 9. As will be noted, the mounting aperture 22 formed in the end of the flap 18 is thus brought into alignment with the nearest mounting aperture 6 of the connection formation 9. The mounting aperture 22 can then be positioned over the corresponding mounting spigot 27 of the inflator 10 to secure the flap 18 in its folded configuration as shown in figure 7.

Upon actuation of the inflator 10, a large volume of inflating gas will be directed into the inflatable volume of the airbag, thereby rapidly inflating the airbag. As the airbag inflates, the internal pressure of the inflating gas will urge the fabric of the patch 13, and the internal part of the flap 18 inside the inflatable volume against the inner surface of the fabric panel 2, thereby effectively sealing the two slits 11, 16 to prevent the leakage of gas (or at least a significant volume of gas) from the airbag. As will be appreciated, the offset positions of the two slits 11, 16 from one another aids their effective sealing. The flap 18, being folded around the slit 16 in the fabric panel 2 further adds to this sealing effect, whilst also providing increased integrity to the arrangement during inflation by virtue of its connection to the inflator spigot 27. The flap 18 furthermore serves a useful function even before deployment of the airbag 1, by providing a convenient visual confirmation that the inflator spigot 26 is properly received through the mounting aperture 6 in the fabric panel 2 prior to installation of the arrangement in the motor vehicle.

Although features of the invention have been described above with reference to the specific example illustrated in figures 1 to 7, it is to be appreciated that various modifications and alterations can be made to the arrangement without departing from the scope of the claimed invention. For example, in a variant of the arrangement shown in figures 1 to 7, the second slit 16 provided through the patch 13 can be omitted. In such an arrangement, it is envisaged that the second open end of the passage 24 defined between the patch 13 and the fabric panel 2 will instead be defined by the adjacent end edge 15 (i.e. the right-hand end edge in the orientation illustrated) of the patch 13. In such an arrangement, it is therefore important that the line of stitching 23 interconnecting the patch 13 and the panel 2 does not run along the end edge 15.

Figure 8 illustrates a proposed embodiment of the invention, which represents a modification of the arrangement described above in detail and as shown in figures 1 to 7. Accordingly, the same reference numerals are used to denote similar or identical component parts of the arrangement. In the modified arrangement of figure 8, a second flap 28 of flexible material, and most preferably fabric, is provided in addition to the flap 18 of the previously described embodiment. As will be noted, the second flap 28 has a generally similar elongate and trapezoidal shape to the first flap 18, but is somewhat shorter than the first flap 18. The second flap is affixed to the outside of the fabric panel 2, adjacent the slit 11 via a line of stitching running along its end edge and generally parallel to the slit 11. In the unfolded configuration illustrated in figure 8, the second flap 28 lies behind the first flap 18, and between the first flap 18 and the panel 2. As will also be noted from figure 8, the second flap 28 is also preferably slightly wider than the first flap 18 and terminates in a free end which extends slightly beyond the free end of the first flap 18. The second flap has a similar mounting aperture 29 (shown in phantom behind the first flap 18) at its free end.

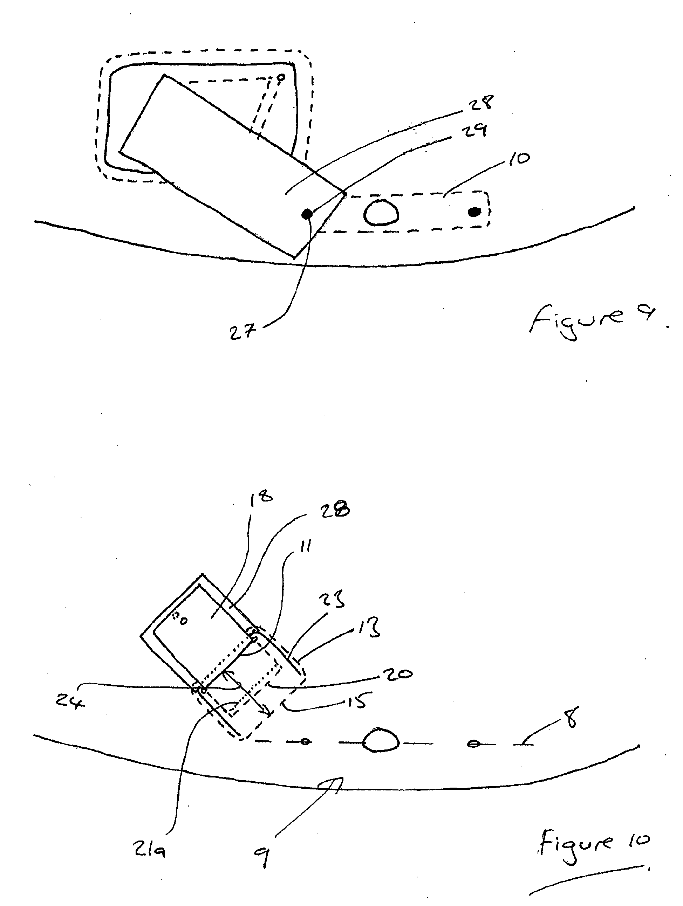

Figure 9 illustrates the arrangement of figure 8 after the first flap 18 has been folded about the slit 11 formed through the fabric panel 2, and also shows the second flap 28 having been folded over in a similar manner. The second flap 28 has thus been folded so as to lie against the first flap 18, and effectively cover the first flap 18. The first flap 18 can thus be considered to represent an inner flap in this arrangement, with the second flap 28 representing an outer flap. The mounting aperture 29 of the second flap 28 is received over the mounting spigot 27 of the inflator 10 after the mounting aperture 22 in the first flap 18. In this arrangement, the outer flap 28 serves to protect the inner flap 18, and provides increased sealing and integrity.

Figure 10 illustrates another embodiment, which effectively represents a variation of the arrangement shown in figures 8 and 9 in the sense that it comprises an inner flap 18 and an outer flap 28. Again, the same reference numerals are used to denote similar or identical components. As will be noted, the principle difference between this arrangement and the previously-described arrangements is in the orientation of the patch 13 and its associated flaps 18, 28 relative to the axis 8 of the connection formation 9. In this arrangement, the patch 13 is affixed to the panel 2 in an orientation in which its major axis makes an acute angle to the axis 8 of the connection formation, and such that its end edges 15 lie substantially parallel to the slit 11 formed through the panel 2. Furthermore, in this arrangement it will be noted that there is no slit provided through the patch 13 (in the manner mentioned above). Accordingly, it will be noted that the line of stitching 23 interconnecting the patch 13 and the panel 2 runs only along the side edges of the patch 13 and the end edge remote from the connection formation 9. The end edge 15 located closest to the connection formation 9 is thus unconnected to the panel 2, and therefore defines the second open end to the passageway 24, proximal to the connection formation 9. Also, it will be noted that because the orientation of the flaps 18, 28 is now changed, they are generally rectangular in configuration rather than trapezoidal as in the previously described embodiments.

In other respects, the arrangement of figure 10 operates in substantially the same manner to the previously described embodiments, and notably still defines a passageway 24 between the patch 13 and the panel 2 which extends generally from the slit 11 formed through the panel 2 to the connection formation 9 for connection to the inflator. Furthermore, it will be noted that in all of the embodiments described above, the length of the passageway 24 is preferably shorter than the length of the inflator 10 to be inserted though the passageway. This is to facilitate more convenient manipulation of the airbag and the inflator to insert the inflator all the way through the passageway towards the connection formation.

When used in this specification and claims, the terms "comprises" and "comprising" and variations thereof mean that the specified features, steps or integers are included. The terms are not to be interpreted to exclude the presence of other features, steps or integers.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. An airbag (1) for a motor vehicle safety arrangement, the airbag defining an inflatable volume for the receipt of inflating gas from an inflator (10) and being formed from a panel (2) of flexible material, the panel (2) having an aperture (11) configured to receive an inflator (10) for insertion into the inflatable volume, and a connection formation (9) which is spaced from the aperture (11) and configured for connection to an inflator (10) provided inside the inflatable volume, the airbag (1) having an internal patch (13) of flexible material provided inside the inflatable volume and which is affixed to panel (2) so as to cover the aperture (11), the patch (13) and the panel (2) cooperating to define a passageway (24) extending generally from the aperture (11) towards the connection formation (9) and being configured for the passage therethrough of an inflator (10) upon insertion of the inflator (10) into the inflatable volume via the aperture (11), the airbag being **characterised by** further comprising inner (18) and outer (28) flaps of flexible material, the inner flap (18) being arranged to extend through the aperture (11) in the panel (2) from a first end which is affixed to the patch (13), to a second end located outside the inflatable volume, and the outer flap (28) being affixed to the outside of the panel (2) adjacent the aperture (11) in the panel (2).

2. An airbag according to claim 1, wherein said aperture (11) is spaced from a peripheral seam (4) of the airbag (1).

3. An airbag according to claim 1 or claim 2, wherein said passageway (24) has a first open end (25) distal to said connection formation (9) and defined by said aperture (11) in the panel, and a second open end (26) proximal to said connection formation (9).

4. An airbag according to claim 3, wherein said second open end (26) is defined by an edge (15) of the patch (13), said edge (15) being unconnected to the panel (2).

5. An airbag according to claim 3 or claim 4, wherein said second open end (26) is defined by an aperture (16) provided through said patch (13).

6. An airbag according to any preceding claim, wherein the or at least one said aperture (11, 16) is provided in the form of a slit.

7. An airbag according to claim 6 as dependent upon claim 5, wherein said first open end (25) is defined by a first slit (11) provided in the panel (2), and said second open end (26) is defined by a second slit (16) provided in the patch (13), said slits (11,16) being substantially parallel.

8. An airbag according to claim 1, wherein the flap (18) is arranged to be folded in the region of the aperture (11) formed in the panel (2) so as to adopt a folded configuration in which the second end of the flap (18) lies adjacent an outer surface of the panel (2) in the region of the connection formation (9).

9. An airbag according to claim 8, wherein the outer flap (28) is arranged to lie over and against the inner flap (18) when the inner flap (18) adopts said folded configuration.

10. An airbag according to any preceding claim, wherein said connection formation (9) comprises at least one mounting aperture (6) formed through the panel (2) and configured to receive a mounting formation (27) projecting from an inflator (10).

11. An airbag according to either claim 8 or claim 9, wherein the or each said flap (18, 28) comprises a respective additional mounting aperture (22,29) configured to receive said mounting formation (27) of said inflator (10) for connection thereto.

12. An airbag according to any preceding claim,provided in combination with said inflator (10).

13. A method of inserting an inflator (10) inside an airbag (1) for a motor vehicle safety arrangement, the method comprising the steps of: providing an inflator (10); providing an airbag (1) defining an inflatable volume for the receipt of inflating gas from the inflator (10) and which is formed from a panel (2) of flexible material; providing an aperture (11) in the panel (2), the aperture (11) being configured to receive said inflator (10); providing the panel (2) with a connection formation (9) in spaced relation to the aperture (11) and which is configured for connection to said inflator (10), providing an internal patch (13) of flexible material inside the inflatable volume; affixing the patch (13) to the inside surface of the panel (2) so as to cover the aperture (11) and in a manner effective to define a passageway (24) between the patch (13) and the panel (2), the passageway (24) extending generally from the aperture (11) towards the connection formation (9); inserting the inflator (10) into the internal volume via the aperture (11) and passing the inflator (10) through the passageway (24) towards the connection formation (9); and connecting the inflator (10) to the panel (2) via the connection formation (9), the method being **characterised in that** it further comprises providing said airbag (1) with inner (18) and outer (28) flaps of flexible material, the inner flap (18) being arranged to extend through the aperture (11) in the panel (2) from a first end which is affixed to the patch (13), to a second end located outside the inflatable volume, and the outer flap (28) being affixed to the outside of the panel (2) adjacent the aperture (11) in the panel (2), the method further comprising the step of folding the inner flap (18) after the inflator (10) has been passed through the passageway (24) to thereby bring the free end of the inner flap (18) into a position in which it lies adjacent the outer surface of the panel (2) in the region of the connection formation (9), and folding the second flap (28) such that it lies against the first flap (18)..

## Patentansprüche

1. Airbag (1) für eine Sicherheitsanordnung eines Kraftfahrzeugs, wobei der Airbag ein füllbares Volumen zur Aufnahme von Füllgas aus einem Gasgenerator (10) definiert und aus einer Bahn (2) aus flexiblem Material gebildet ist, wobei die Bahn (2) eine Öffnung (11) aufweist, die so eingerichtet ist, dass sie einen Gasgenerator (10) zum Einsetzen in das füllbare Volumen aufnimmt, und eine Verbindungsstruktur (9), die von der Öffnung (11) beabstandet und für die Verbindung mit einem Gasgenerator (10) eingerichtet ist, der in dem füllbaren Volumen angeordnet ist, wobei der Airbag (1) ein inneres Aufsetzteil (13) aus flexiblem Material aufweist, das in dem füllbaren Volumen angeordnet ist und das an der Bahn (2) befestigt ist, um die Öffnung (11) zu bedecken, wobei das Aufsetzteil (13) und die Bahn (2) zusammenwirken, um einen Durchgang (24) zu definieren, der ganz allgemein von der Öffnung (11) aus in Richtung der Verbindungsstruktur (9) verläuft und zum Hindurchführen eines Gasgenerators (10) dort hindurch beim Einsetzen des Gasgenerators (10) in das füllbare Volumen über die Öffnung (11) eingerichtet ist, wobei der Airbag **dadurch gekennzeichnet ist, dass** er ferner eine innere (18) und äußere (28) Klappe aus flexiblem Material umfasst, wobei die innere Klappe (18) so angeordnet ist, dass sie durch die Öffnung (11) in der Bahn (2) von einem ersten Ende, das an dem Aufsetzteil (13) befestigt ist, zu einem zweiten Ende verläuft, das außerhalb des füllbaren Volumens befindlich ist, und wobei die äußere Klappe (28) außen an der Bahn (2) angrenzend an die Öffnung (11) in der Bahn (2) befestigt ist.

2. Airbag nach Anspruch 1, wobei die Öffnung (11) von einer Umfangsnaht (4) des Airbags (1) beabstandet ist.

3. Airbag nach Anspruch 1 oder Anspruch 2, wobei der Durchgang (24) ein erstes offenes Ende (25) distal zu der Verbindungsstruktur (9) aufweist, das durch die Öffnung (11) in der Bahn definiert ist, und ein zweites offenes Ende (26) proximal zu der Verbindungsstruktur (9).

4. Airbag nach Anspruch 3, wobei das zweite offene Ende (26) durch einen Rand (15) des Aufsetzteils (13) definiert ist, wobei der Rand (15) nicht mit der Bahn (2) verbunden ist.

5. Airbag nach Anspruch 3 oder Anspruch 4, wobei das zweite offene Ende (26) durch eine Öffnung (16) definiert ist, die durch das Aufsetzteil (13) hindurch vorgesehen ist.

6. Airbag nach einem vorhergehenden Anspruch, wobei die oder mindestens eine solche Öffnung (11, 16) in Form eines Schlitzes vorgesehen ist.

7. Airbag nach Anspruch 6, wenn abhängig von Anspruch 5, wobei das erste offene Ende (25) durch einen ersten Schlitz (11) definiert ist, der in der Bahn (2) angeordnet ist, und das zweite offene Ende (26) durch einen zweiten Schlitz (16) definiert ist, der in dem Aufsetzteil (13) angeordnet ist, wobei die Schlitze (11, 16) im Wesentlichen parallel verlaufen.

8. Airbag nach Anspruch 1, wobei die Klappe (18) so angeordnet ist, dass sie im Bereich der Öffnung (11), die in der Bahn (2) ausgebildet ist, gefaltet ist, um eine gefaltete Gestalt anzunehmen, in der das zweite Ende der Klappe (18) angrenzend an eine Außenfläche der Bahn (2) im Bereich der Verbindungsstruktur (9) liegt.

9. Airbag nach Anspruch 8, wobei die äußere Klappe (28) so angeordnet ist, dass sie über und an der inneren Klappe (18) liegt, wenn die innere Klappe (18) die gefaltete Gestalt annimmt.

10. Airbag nach einem vorhergehenden Anspruch, wobei die Verbindungsstruktur (9) mindestens eine Montageöffnung (6) umfasst, die durch die Bahn (2) hindurch ausgebildet und so eingerichtet ist, dass sie eine Montagestruktur (27) aufnimmt, die aus einem Gasgenerator (10) ragt.

11. Airbag nach Anspruch 8 oder Anspruch 9, wobei die oder jede Klappe (18, 28) eine jeweilige zusätzliche Montageöffnung (22, 29) umfasst, die so eingerichtet ist, dass sie zur Verbindung damit die Montagestruktur (27) des Gasgenerators (10) aufnimmt.

12. Airbag nach einem vorhergehenden Anspruch, der in Verbindung mit dem Gasgenerator (10) vorgesehen ist.

13. Verfahren zum Einsetzen eines Gasgenerators (10) in einen Airbag (1) für eine Sicherheitsanordnung eines Kraftfahrzeugs, wobei das Verfahren folgende Schritte umfasst: Bereitstellen eines Gasgenerators (10); Bereitstellen eines Airbags (1), der ein füllbares Volumen zur Aufnahme von Füllgas aus dem Gasgenerator (10) definiert und der aus einer Bahn (2) aus flexiblem Material gebildet wird; Bereitstellen einer Öffnung (11) in der Bahn (2), wobei die Öffnung (11) so eingerichtet wird, dass sie den Gasgenerator (10) aufnimmt; Versehen der Bahn (2) mit einer Verbindungsstruktur (9) in beabstandetem Verhältnis zu der Öffnung (11) und die für die Verbindung mit dem Gasgenerator (10) eingerichtet ist, Bereitstellen eines inneren Aufsetzteils (13) aus flexiblem Material in dem füllbaren Volumen; Befestigen des Aufsetzteils (13) an der Innenfläche der Bahn (2), um die Öffnung (11) zu bedecken und derart wirksam, dass ein Durchgang (24) zwischen dem Aufsetzteil (13) und der Bahn (2) definiert wird, wobei der Durchgang (24) ganz allgemein von der Öffnung (11) aus in Richtung der Verbindungsstruktur (9) verläuft; Einsetzen des Gasgenerators (10) in das Innenvolumen über die Öffnung (11) und Hindurchführen des Gasgenerators (10) durch den Durchgang (24) in Richtung der Verbindungsstruktur (9); und Verbinden des Gasgenerators (10) mit der Bahn (2) über die Verbindungsstruktur (9), wobei das Verfahren **dadurch gekennzeichnet ist, dass** es ferner das Versehen des Airbags (1) mit einer inneren (18) und äußeren (28) Klappe aus flexiblem Material umfasst, wobei die innere Klappe (18) so angeordnet wird, dass sie durch die Öffnung (11) in der Bahn (2) von einem ersten Ende, das an dem Aufsetzteil (13) befestigt ist, zu einem zweiten Ende verläuft, das außerhalb des füllbaren Volumens befindlich ist, und wobei die äußere Klappe (28) außen an der Bahn (2) angrenzend an die Öffnung (11) in der Bahn (2) befestigt wird, wobei das Verfahren ferner den Schritt des Faltens der inneren Klappe (18) umfasst, nachdem der Gasgenerator (10) durch den Durchgang (24) hindurchgeführt wurde, um dadurch das freie Ende der inneren Klappe (18) in eine Stellung zu bringen, in der sie angrenzend an die Außenfläche der Bahn (2) im Bereich der Ver indungsst ktur (9) liegt, und des Faltens der zweiten Klappe (28), sodass sie an der ersten Klappe (18) liegt.

## Revendications

1. Airbag (1) pour un agencement de sécurité de véhicule à moteur, l'airbag définissant un volume gonflable pour la réception de gaz de gonflage venant d'un gonfleur (10) et étant formé à partir d'un panneau (2) en matériau souple, le panneau (2) présentant une ouverture (11) configurée pour recevoir un gonfleur (10) pour l'insertion dans un volume gonflable, et une structure de raccordement (9) qui est espacée de l'ouverture (11) et configurée pour le raccordement à un gonfleur (10) placé à l'intérieur du volume gonflable, l'airbag (1) présentant une pièce rapportée intérieure (13) en matériau souple placée à l'intérieur du volume gonflable et qui est fixée au panneau (2) de façon à recouvrir l'ouverture (11), la pièce rapportée (13) et le panneau (2) coopérant pour définir un passage (24) s'étendant en général de l'ouverture (11) vers la structure de raccordement (9) et étant configuré pour le passage à travers lui d'un gonfleur (10) lors de l'insertion du gonfleur (10) dans le volume gonflable par le biais de l'ouverture (11), l'airbag étant **caractérisé en ce qu'**il comprend en outre des pattes intérieure (18) et extérieure (28) en matériau souple, la patte intérieure (18) étant agencée pour s'étendre à travers l'ouverture (11) dans le panneau (2) d'une première extrémité qui est fixée à la pièce rapportée (13) à une seconde extrémité située à l'extérieur du volume gonflable, et la patte extérieure (28) étant fixée à l'extérieur du panneau (2) adjacente à l'ouverture (11) dans le panneau (2).

2. Airbag selon la revendication 1, dans lequel ladite ouverture (11) est espacée d'une couture périphérique (4) de l'airbag (1).

3. Airbag selon la revendication 1 ou la revendication 2, dans lequel ledit passage (24) présente une première extrémité ouverte (25) distale par rapport à la structure de raccordement (9) et définie par ladite ouverture (11) dans le panneau, et une seconde extrémité ouverte (26) proximale par rapport à la structure de raccordement (9).

4. Airbag selon la revendication 3, dans lequel ladite seconde extrémité ouverte (26) est définie par un bord (15) de la pièce rapportée (13), ledit bord (15) n'étant pas raccordé au panneau (2).

5. Airbag selon la revendication 3 ou la revendication 4, dans lequel ladite seconde extrémité ouverte (26) est définie par une ouverture (16) prévue à travers ladite pièce rapportée (13).

6. Airbag selon une quelconque revendication précédente, dans lequel ladite ou au moins une dite ouverture (11, 16) est prévue sous forme d'une fente.

7. Airbag selon la revendication 6, quand elle dépend de la revendication 5, dans lequel ladite première extrémité ouverte (25) est définie par une première fente (11) placée dans le panneau (2), et ladite seconde extrémité ouverte (26) est définie par une seconde fente (16) placée dans la pièce rapportée (13), lesdites fentes (11, 16) étant essentiellement parallèles.

8. Airbag selon la revendication 1, dans lequel la patte (18) est agencée pour être pliée dans la zone de l'ouverture (11) formée dans le panneau (2) de façon à adopter une configuration pliée dans laquelle la seconde extrémité de la patte (18) se trouve adjacente à une surface extérieure du panneau (2) dans la zone de la structure de raccordement (9).

9. Airbag selon la revendication 8, dans lequel la patte extérieure (28) est agencée pour se trouver par-dessus et contre la patte intérieure (18) quand la patte intérieure (18) adopte ladite configuration pliée.

10. Airbag selon une quelconque revendication précédente, dans lequel ladite structure de raccordement (9) comprend au moins une ouverture de montage (6) formée à travers le panneau (2) et configurée pour recevoir une structure de montage (27) dépassant d'un gonfleur (10).

11. Airbag selon soit la revendication 8, soit la revendication 9, dans lequel ladite ou chaque dite patte (18, 28) comprend une ouverture de montage supplémentaire respective (22, 29) configurée pour recevoir ladite structure de montage (27) dudit gonfleur (10) pour le raccordement à celui-ci.

12. Airbag selon une quelconque revendication précédente, prévu en combinaison avec ledit gonfleur (10).

13. Procédé d'insertion d'un gonfleur (10) à l'intérieur d'un airbag (1) pour un agencement de sécurité de véhicule à moteur, le procédé comprenant les étapes consistant à : mettre à disposition un gonfleur (10) ; mettre à disposition un airbag (1) définissant un volume gonflable pour la réception de gaz de gonflage venant du gonfleur (10) et qui est formé à partir d'un panneau (2) en matériau souple ; mettre à disposition une ouverture (11) dans le panneau (2), l'ouverture (11) étant configurée pour recevoir ledit gonfleur (10) ; munir le panneau (2) d'une structure de raccordement (9) se trouvant espacée par rapport à l'ouverture (11) et qui est configurée pour le raccordement audit gonfleur (10), mettre à disposition une pièce rapportée intérieure (13) en matériau souple à l'intérieur du volume gonflable ; fixer la pièce rapportée (13) à la surface intérieure du panneau (2) de façon à recouvrir l'ouverture (11) et de manière effective pour définir un passage (24) entre la pièce rapportée (13) et le panneau (2), le passage (24) s'étendant en général de l'ouverture (11) vers la structure de raccordement (9) ; insérer le gonfleur (10) dans le volume intérieur par le biais de l'ouverture (11) et passer le gonfleur (10) à travers le passage (24) vers la structure de raccordement (9) ; et raccorder le gonfleur (10) au panneau (2) par le biais de la structure de raccordement (9), le procédé étant **caractérisé en ce qu'**il comprend en outre l'étape consistant à munir ledit airbag (1) de pattes intérieure (18) et extérieure (28) en matériau souple, la patte intérieure (18) étant agencée pour s'étendre à travers l'ouverture (11) dans le panneau (2) d'une première extrémité qui est fixée à la pièce rapportée (13) à une seconde extrémité située à l'extérieur du volume gonflable, et la patte extérieure (28) étant fixée à l'extérieur du panneau (2) adjacente à l'ouverture (11) dans le panneau (2), le procédé comprenant en outre l'étape consistant à plier la patte intérieure (18) après que le gonfleur (10) a été passé à travers le passage (24) pour amener ainsi l'extrémité libre de la patte intérieure (18) dans une position dans laquelle elle se trouve adjacente à la surface extérieure du panneau (2) dans la zone de la structure de raccordement (9), et à plier la seconde patte (28) de sorte qu'elle se trouve contre la première patte (18).
